# EUROPEAN PATENT APPLICATION

(11) **EP 1 043 118 A1**
(43) Date of publication of application: **11.10.2000**
(21) Application number: 98940596.4
(22) Date of filing: 28.08.1998
(51) Int. Cl.: B23Q 17/09, B23Q 41/00, G05B 15/02

(54) **PREPARATION OF TOOL INFORMATION DATABASE FOR NC MACHINING AND SYSTEM FOR MANAGING TOOLS BY UTILIZING THE TOOL INFORMATION DATABASE**

(71) Applicant: Mori Seiki Co., Ltd., Yamatokoriyama-shi, Nara 639-1104 (JP); Okuma Corporation, Nagoya-shi, Aichi 462-0032 (JP); Mitutoyo Corporation, Kawasaki-shi, Kanagawa 213-8533 (JP); Yamazaki, Kazuo, El Macero, CA 95618 (US)
(72) Inventor: YAMAZAKI, Kazuo, El Macero, CA 95618 (US); MORITA, Naoki Mori Seiki Co., Ltd., Yamatokoriyama-shi Nara 639-1104 (JP); FUKAYA, Yasushi Okuma Corporation, Oguchi Kojo, Niwa-gun Aichi 480-0193 (JP); MATSUMIYA, Sadayuki Mitutoyo Corporation, Kawasaki-shi Kanagawa 213-8533 (JP)
(74) Representative: Urner, Peter, Dipl.-Phys.
(86) International application number: JP9803834
(87) International publication number: WO0012259

(57) **Abstract**

Information related to the tools used, inclusive of NC program information, main shaft load information, tool correction information and information on the tool being used is picked up during an actual NC machining and stored in a tool information database (9) as actual cutting data correlated to one another. The tool information is reflected on the subsequent machining by a numerical control apparatus (13) and transferred as tool management information to a tool manufacturer or to a tool management department.

## Description

### TECHNICAL FIELD

The present invention relates to a creation of tool information database for NC processing and a tool management system using such a tool information database. The present invention particularly relates to an improved tool information data storage method and a tool management system which can store, during actual processing, actual cutting data associated to various information concerning tools in use, NC instruction information, tool correction information, and spindle load information and can feed them back to a tool management department or a tool manufacturer as the tool information based on the cutting results.

According to the present invention, the tool information database is not used merely for tool management, cutting condition control, and cutting result control of the user's own machine tools, but also used to provide the tool manufacturer with the tool utilization conditions (cutting conditions) and utilization time (utilization amount) when the customer actually uses that tool as the result information. The present invention is therefore very useful for customer control by tool manufacturers.

### BACKGROUND ART

A numerically controlled machine tool can automatically control a machine tool using an input of an NC program. Further, in combination with microprocessor, power electronics, or software technologies, computerized numerically controlled machine tools (CNC machine tool) are now widely used in various industrial fields.

Usually, numerical control information such as an NC program contains unique information such as tool indexing, spindle rotation, feedrate, moving/interpolation, and auxiliary function instructions, as well as processing history data. Numerical control information suitable to the machine tool as the processing control subject is generated as the NC program each time.

In conventional practice, numerical control information is prepared using provided material data and final part shape data. These data are formed into a desired NC program using CAD/CAM or an automatic programing tool, and this NC program is used to conduct repeated simulations or test cutting on the actual machine tool for NC program adjustment (corrective editing) at site. Finally, the NC program is used for actual processing control of the machine tool. The NC program adjustment includes tool path optimization as well as optimization of tool cutting conditions such as cutting speed, feedrate, and cutting amount. For such optimization, it is necessary to conduct simulations and test cutting and to include the processing know-how of skilled workers. Conventionally, skilled workers manually correct the program in most cases because such correction processes are not formed into a database. Because of a decline in the number of skilled workers, improved tool performance, and a diversity of workpiece materials, it is unlikely that tool cutting conditions, in particular, are properly optimized at present. It is therefore now difficult for a tool manufacturer to understand in what type of processing and under what conditions its tools are being used. Although the manufacturer can quickly provide the latest information over the Internet relatively, such information can only be provided in one direction, and information about development of optimum tools and about optimum cutting conditions suitable to individual users can not be supplied. For both the tool manufacturer and machine tool customer, effective utilization of cutting result data is not sufficiently satisfactory.

The present invention was achieved in view of the above conventional drawbacks. It is an object of the invention to automatically store the cutting results on the user's machine tool in association with various information of the tool in use, NC instruction information, tool correction information, and spindle load information without relying on the know-how or experience of the workers at site. This tool database can be also used for tool management, cutting condition control and cutting result control. Further, when provided to the tool manufacturer, these data can be incorporated into the customer control system of the tool manufacturer, which enables supplement (fulfillment) of test processing data, grasping the trend of needs and extraction of new needs, engineering information provision services including detailed cutting conditions and cutting methods for individual customers and a proposal of appropriate tool inventory.

### DISCLOSURE OF THE INVENTION

As described above, the present invention enables automatic storage of tool information database based on cutting results without requiring any labor of workers during actual processing.

By providing the tool manufacturer with the tool information based on the cutting results according to the present invention, the customer can obtain more precise engineering information about individual or special processing method and processing conditions from the tool manufacturer.

Further, the tool management system of the present invention enables the tool manufacturer to provide the service to calculate the number of appropriate inventory tools with reference to the customer's tool utilization results and provide a delivery schedule by tool type.

### BRIEF DESCRIPTION OF THE DRAWINGS

Fig. 1 is a block diagram showing the entire configuration of a numerically controlled system incorporating the tool information database preparation and processing control functions according to the present invention;
Fig. 2 is a block diagram showing the tool information database and the tool management system according to the present invention; and
Fig. 3 is an example of protection condition items according to the present invention.

### BEST MODE FOR CARRYING OUT THE INVENTION

Referring to the attached drawings, a preferred embodiment of the present invention will be described below.

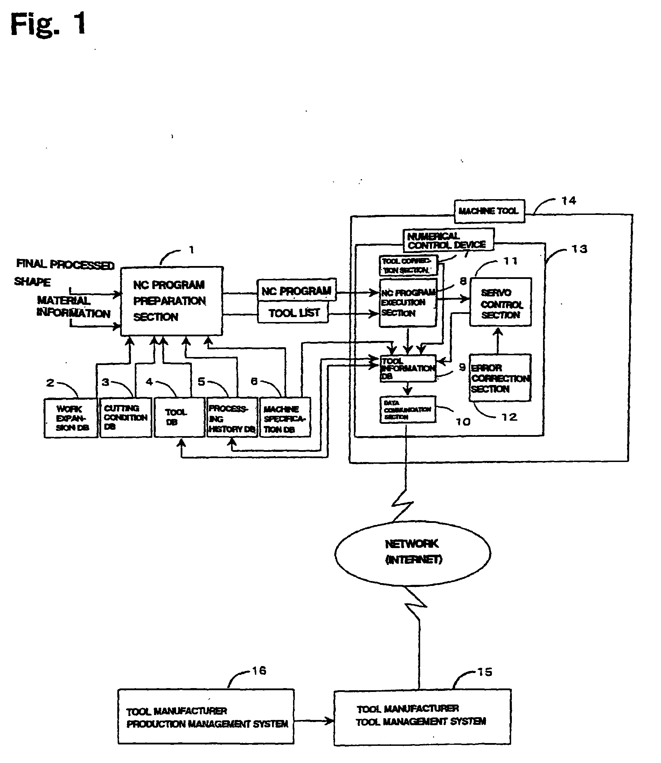

Fig. 1 shows the entire configuration of a numerically controlled machine tool system to which the tool information database creation method and the data transfer method to a tool manufacturer according to the present invention are applied.

With the material information and the final processed shape provided, an NC program generation section 1 generates an NC program. The NC program generation section 1 generates a desired NC program with the processing know-how data obtained from various databases in which such data was stored in the past, in connection with the material information and the final processed shape input as above. In this embodiment, this database comprises a work expansion database 2, a cutting condition database 3, a tool database 4 and a processing history database 5. From these databases, know-how used at the processing site, site specification, and other conditions required for actual processing and conditions peculiar to the machine tool to be used are supplied to the NC program generation section 1 as reference data for NC program generation.

The NC program and tool list thus generated are sent to a numerical control device 13 and subjected to operation without load, test cutting, and simulations as required. After NC program editing, not shown in the drawing, the actual processing program to be used at site for the numerical control device 13 is finally completed.

To drive the machine tool, the numerical control device 13 comprises an NC program execution section 8, a tool correction section 7, a servo control section 11 and an error correction section 12. The above NC program and the tool list are input to the NC program execution section 8. The NC program execution section 8 uses the above input data to make interpolation according to the appropriate feedrate and supplies a servo control signal to the servo control section 11 for appropriate feed driving control and spindle rotation control.

The numerical control device 13 further comprises a tool correction section 7, a tool information database 9, and a data communication section 10. The present invention is characterized in that the actual cutting data in actual processing is stored as the tool information data in association with various types of information of the tool in use, NC instruction information, tool correction information, and spindle additional information. For this purpose, various databases and numerical control information for actual processing are supplied to the above tool information database 9. Specifically, the tool information database 9 is provided with the execution block information of the NC program together with modal information from the NC program execution section 8, and such information is stored in the tool information database 9 as the NC program information. In addition, the tool correction section 7 inputs the tool correction information and the servo control section 11 inputs the servo control information and in particular spindle load information, which are associated to the tool information database 9 before storage. Further, to the tool information database 9, the information of the tool currently in use is retrieved and supplied from the tool database 4. In the embodiment shown in the drawing, the past processing history is further supplied from the processing history database 5. A machine specification database 6 also supplies the machine specification information for a machine tool 14 to the tool information database 9.

As described above, and as clearly understood from Fig. 1, the tool information database 9 stores various actual measurement data in actual processing in association with various information about the tool in use, NC instruction information, tool correction information and spindle load information so that it can store the tool information based on the actual processing situations according to this embodiment.

In the present invention, the tool information as described above can be further sent from the database 9 to the tool management department or tool manufacturer. In Fig. 1, the tool information in the tool information database 9 is transferred to a tool management system 15 of the tool manufacturer over the network. Specifically, the tool information database 9 is, by the data communication section 10, connected to the tool manufacturer tool management system 15 over the network, and reference data in the processing history database 5 and the tool database 4 are also fetched for preparation of tool utilization information peculiar to the applicable machine tool. Further, the tool information database 9 feeds back the latest information to the processing history database 5 and the tool database 4 to prepare for generation of the next NC program. In this embodiment, these transfer data can, of course, be transferred to the tool management system 15 of the customer's tool management department or the tool manufacturer on a storage media.

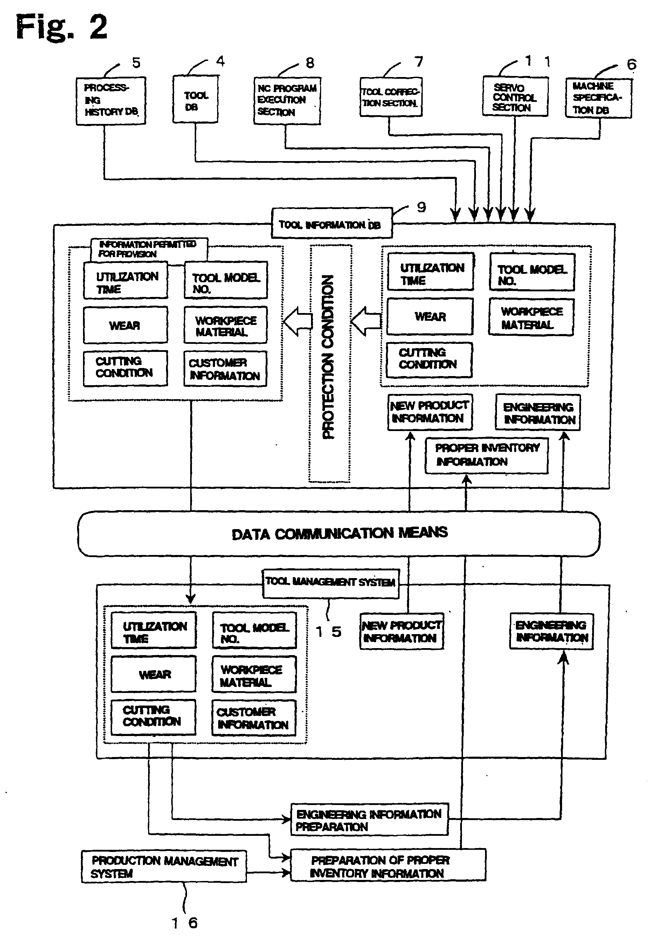

Fig. 2 shows the detailed types of information sent and received between the tool information database 9 and the tool manufacturer tool management system 15 of Fig. 1. The tool information database collects information about utilization time, wear, workpiece material and cutting conditions for each tool model No. by storing the information from the processing history database, the tool database, the NC program execution section, the tool correction section and the servo control section. However, it is not always necessary for the processing party using the numerical control device 13 to provide all of such information to the tool manufacturer, and some of the information may preferably remain confidential business or trade know-how. For this reason, Fig. 2 shows that the information items not allowed for publication by the customer among the information data are protected so that only the data items allowed for publication are selected and provided to the tool manufacturer with the customer information added. For protection, various protect conditions can be given if certain requirements are satisfied.

The tool manufacturer can learn how its tools are used by acquiring and analyzing the information published as the information permitted for provision from the customer. The tool manufacturer can prepare engineering information from the utilized cutting condition data and provide the customer with such engineering information as a service. In addition, that entity can calculate the tool utilization frequency and tool consumption amount from the tool utilization time. Further, the manufacturer can calculate the production capacity from a tool manufacturer production management system 16 to determine the required delivery by tool model No. From these data, the tool manufacturer can prepare the appropriate inventory information for each customer and provide it to the customer as the appropriate inventory information.

New product information from the tool manufacturer can be directly supplied to the customer's tool information database, which is useful for both the tool manufacturer and the customer.

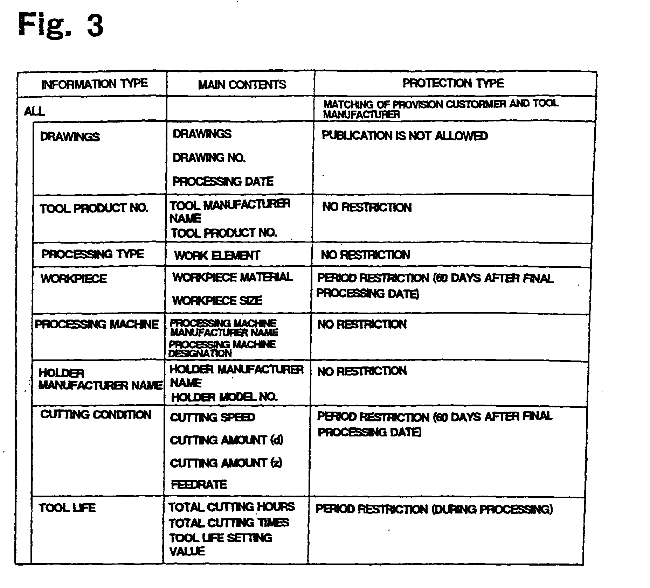

Fig. 3 shows a protection condition example. This embodiment is characterized by protection methods. First, no information is provided unless the information provision destination matches the tool manufacturer name. This prevents inappropriate information from being transmitted to the tool manufacturer. This protection is incorporated in the tool information database such that even the customer cannot cancel it. Thus, inappropriate acquisition by a tool manufacturer of other manufacturer's information is prevented. Secondly, the customer itself can arrange protection according to various conditions and the information protected by the customer is not sent to the tool manufacturer. For example, information whose publication is not allowed will never be published. Alternatively, the information may be placed under period restriction so that it can be published after the elapse of a certain period from the final processing date.

## Claims

1. A tool information database preparation method for NC processing in which processing control is made by an NC program, comprising the steps of:
extracting execution block information of the NC program together with modal information from an NC program execution section as NC program information;
extracting spindle load information from a servo control section;
extracting tool correction information currently in use from a tool correction section; and
retrieving tool information currently in use from a tool database, wherein:
respective actual cutting data obtained from the above processes during actual processing are mutually associated and stored to create a tool information database.

2. A tool management system according to the method of claim 1, wherein the tool information is transferred to a tool management department or a tool manufacturer over a network or via a storage medium.

3. The tool management system according to claim 2, wherein information not desired to be provided to the tool manufacturer is protected.

4. A tool management system for a customer according to the system of claim 2 or 3, wherein:
information about a manufacturer's tools provided by the customer is collected and stored as the manufacturer's tool database by tool or by processing element; and
test processing data based on the manufacturer's tool database is provided to the customer as technical information containing cutting conditions and cutting methods.

5. A tool management system for a customer according to the system of claim 2 or 3, wherein:
information about a manufacturer's tools provided by the customer is collected and stored as the manufacturer's tool database by tool or by processing element; and
the appropriate inventory by customer is calculated based on the customer's tool utilization results extracted from the manufacturer's tool information and the manufacturer's delivery schedule by tool type and is notified to the customer.
